# EUROPÄISCHE PATENTSCHRIFT

(11) **EP 0 785 814 B1**
(45) Veröffentlichungstag und Bekanntmachung des Hinweises auf die Patenterteilung: **29.07.1998**
(21) Anmeldenummer: 95936450.6
(22) Anmeldetag: 06.10.1995
(51) Int. Cl.: B01D 11/04, B01D 11/02

(54) **VERFAHREN ZUR HOCHDRUCKSPRÜHEXTRAKTION VON FLÜSSIGKEITEN**
LIQUID HIGH PRESSURE SPRAYING EXTRACTION PROCESS
PROCEDE D'EXTRACTION PAR PULVERISATION DE LIQUIDES SOUS HAUTE PRESSION

(30) Priorität: 11.10.1994 DE 4436223
(43) Veröffentlichungstag der Anmeldung: 30.07.1997
(73) Patentinhaber: Lucas Meyer GmbH & Co, 20539 Hamburg 28 (DE)
(72) Erfinder: EGGERS, Rudolf, D-21614 Buxtehude (DE); WAGNER, Henning, D-21073 Hamburg (DE); SCHNEIDER, Michael, D-20539 Hamburg (DE)
(74) Vertreter: Glaeser, Joachim, Dipl.-Ing.
(86) Internationale Anmeldenummer: EP9503950
(87) Internationale Veröffentlichungsnummer: WO9611043

(56) Entgegenhaltungen:
- EP-A- 0 137 214
- EP-A- 0 450 378
- EP-A- 0 464 968
- DE-A- 3 919 384

## Beschreibung

Die Erfindung bezieht sich auf ein Verfahren zur Hochdrucksprühextraktion von flüssigen Lösungen und Suspensionen im Druckbereich bis 1000 bar mit Hilfe von verdichteten Gasen, wie CO2, Propan, Butan und Gemische davon mit und ohne Zusätze von Schleppmitteln wie: Ethanol, Propanol, Methanol, Azeton, Wasser, Methyl-Ethyl-Keton, umfassend die Vermischung von Flüssigkeit und Gas und die Stofftrennung.

Bekanntermaßen ist für Extraktionsprozesse die Einstellung einer optimalen Verweilzeit notwendig. In diskontinuierlichen Batchverfahren ergibt sich diese durch die Zeitspanne der Beaufschlagung mit dem Extraktionsgas (DE 33 16 705 A1). Das erfindungsgemäße Verfahren ermöglicht demgegenüber die Kontinuierliche Führung des Extraktionsgases bei gleichzeitiger Gewährleistung optimaler Verweilzeiten der Flüssigkeit in diesem Gas.

Für die Zerkleinerung von Feststoffen ist der Einsatz von Druckwechselbeaufschlagungen bekannt (DE 26 32 045 C2). Bei Extraktionsvorgängen mit verdichteten Gasen muß die Dispergierung einer Flüssigkeit jedoch mit möglichst geringen Druckverlusten erfolgen, da sonst die Lösefähigkeit des Gases erheblich abnimmt und eine Extraktion unmöglich wird. Auch eine Druckwechselbeaufschlagung wäre nachteilig, da die erzielbaren Tropfenspektren dann nicht mehr zeitkonstant wären und damit die Produktqualität uneinheitlich ausfallen wurde. Aufgabe der Erfindung ist es daher, ein Hochdrucksprühextraktionsverfahren anzugeben, bei dem in einer Sprüheinrichtung eine gleichbleibende Feindispergierung der Flüssigkeit ohne Druckwechselbeaufschlagung erreicht wird und sich in einer geeigneten Extraktionsgeometrie die optimale Verweilzeit einstellt.

Im Unterschied zu bekannten Düsenextraktionsverfahren findet bei der Hochdrucksprühextraktion die Beladung nicht in einer Mischkammer statt. Vielmehr wird unterschieden zwischen einer Mischzone und einer daran anschließenden Beladungszone.

Die örtliche Trennung der beiden Verfahrensschritte "Mischen" und "Beladen" ist physikalisch von Vorteil, weil durch variable Gestaltung dieser beiden Zonen gemäß der Erfindung
a) beim Vermischen eine gegenüber bekannten Einrichtungen wesentliche erhöhte Turbulenz bzw. feinere Tropfenbildung eingestellt werden kann
   und
b) in der nachfolgenden Beladungszone den aus der Mischzone austretenden Sprühpartikeln eine ausreichende Verweilzeit und geometrisch optimierte Flugbahnen für den Stoffübergang (Beladung) gegeben werden können.

Gegenüber herkömmlichen Sprühverfahren bietet die Hochdrucksprühextraktion den Vorteil, daß sich die herrschenden Prozeßbedingungen positiv auf die Versprühung auswirken. Bezüglich der Viskosität führt die unter Druck wesentlich erhöhte Lösefähigkeit des Gases in der Flüssigkeit zu einer erheblichen Reduzierung, so daß die Flüssigkeit leichter in Tropfen zerschlagen werden kann. Insbesondere jedoch die mit zunehmendem Druck ermittelte Reduzierung der Grenzflächenspannung zwischen den zu vermischenden Phasen führt zur Bildung kleiner Tropfen (Beleg: Computergestützte Aufnahme von zwei Tropfen in überkritischem Kohlendioxid bei unterschiedlichen Drücken).

Die Mischzone ist darüber hinaus geometrisch so zu gestalten, daß die hohe kinetische Energie des verdichteten Gases durch einen optimalen Impulsaustausch zum Zerschlagen der Flüssigkeit in kleine Tropfen genutzt wird. Die räumliche Ausgestaltung der Mischzone bei der Sprühextraktion kann sowohl als Zweistoffdüse mit hochturbulenter Quer- oder Drallströmung des Gases als auch als zwei aufeinandergerichtete Einstoffdüse (Pralleffekt) ausgeführt werde. Denkbar ist ebenso der Einsatz eines statischen Mischers mit anschließender Einstoffverdüsung des Gemisches aus Gas und Flüssigkeit.

Die Ausgestaltung der Beladungszone richtet sich nach der für den Stoffübergang notwendigen Verweilzeit. Bei relativ kurzen Verweilzeiten, z. B. für die Entölung von Rohlecithin, ist eine zylindrische Ausgestaltung sinnvoll, weil der Stoffübergang vor dem Aufprall der versprühten Partikel auf die Wand der Beladungszone abgeschlossen ist. Bei wässrigen Phasen liegen größere Transportwiderstände vor, so daß die Beladungszone größere Verweilzeiten ohne Wandkontakt ermöglichen muß, z.b. ist für die Abtrennung von Koffein oder Nikotin aus wässrigen Lösungen die Kugel- oder abgeschnittene Kegelform von Vorteil. Gleiches gilt für den Fall, daß die aufnehmende Phase sich nahezu mit dem gesamten Feedstrom beladen muß, z.B. also der Rohölent-schleimung, bei der ca. 98% des Feedstromes in Lösung gehen und die Phosphatide in der Beladungszone abgeschieden werden.

Mit der Extraktion einhergehend kann auch eine bestimmte Partikelbildung angestrebt werden. Hierzu ist es sinnvoll, in der Extraktionszone ein anderes Gas als das zur Extraktion verwendete vorzulegen. Das sich bildende Gasgemisch zeichnet sich dann durch ein verändertes Lösungsverhalten aus, so daß die gewünschten Stoffe als mikrokristalline Partikel ausfallen (Beispiel: Extraktion mit CO₂ in einer Extraktionszone mit N₂).

Anwendung des Verfahrens gemäß der Erfindung:

Die Hochdrucksprühextraktion mit getrennter Misch- und Beladungszone eignet sich für reine Trennprobleme wie z.B.
- Entölung von Rohlecithin
- Entschleimung von Rohöl
- Entölung von hydrolisiertem Sojalecithin
- Entfettung und Entcholesterinisierung von Flüssigei
- Lipidgewinnung aus Biomassen aus der Fermentation
- Gewinnung von ätherischen Ölen und Aromen aus wässrigen oder alkoholischen Pflanzenextrakten
- Wirkstoffentzug aus wässrigen Lösungen
- Koffein aus Kaffee- oder Tee-Extrakten, Ginseng, Pestizidentfernung aus wässrigen oder öligen Pflanzenextrakten (z.B. Hopfen)
- Erzeugung mikrokristalliner Stoffe z.B. Arzneimittel für Inhalatoren) aus Lösungen, wobei das Lösemittel in verdichten Gas(gemisch) löslich ist (z.B. Ethanol, Wasser u.a.)
- Trocknung von wasser-lösemittelhaltigen Gemischen.

Sie eignet sich auch zur Herstellung von neuen Produkte, z.B. zur Beschichtung von Antibiotika mit Phosholipiden, die gemeinsam zuvor z. B. in einem Alkoholgemisch gelöst waren, das in der Beladungszone in das überkritische Gas übergeht. Damit eröffnen sich Anwendungen der Hochdrucksprühextraktion im Bereich pharmazeutischer und diätetischer Produkte.

Die Erfindung wird nachstehend anhand der Zeichnung beispielsweise erläutert.
- Fig. 1: zeigt ein Fließschema der Anlage zur Durchführung des Verfahrens gemäß der Erfindung.
- Die Fig. 2 bis 4: zeigen schematische Ausführungsformen der Mischzone.
- Die Fig. 5 bis 7: zeigen schematische Ausführungsformen für die Beladungszone.
- Fig. 8: zeigt ein Beladungsprofil für das Fluid in rohrförmiger Beladungszone.

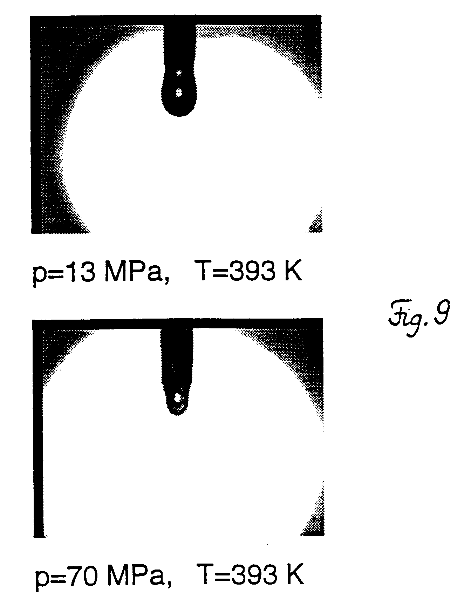

- Fig. 9: zeigt zwei Kopien von Fotos von Tropfenkonturen unter unterschiedlich hohem Druck (p = 13 bzw. 70 MPa) aber gleicher Temperatur (393 k), die die überraschenderweise unter hohem Druck erreichbare große Stoffaustauschfläche bei dem Verfahren gemäß der Erfindung durch Gegenüberstellung belegen.

### Ausführungsbeispiele

### Entölung von Lecithin

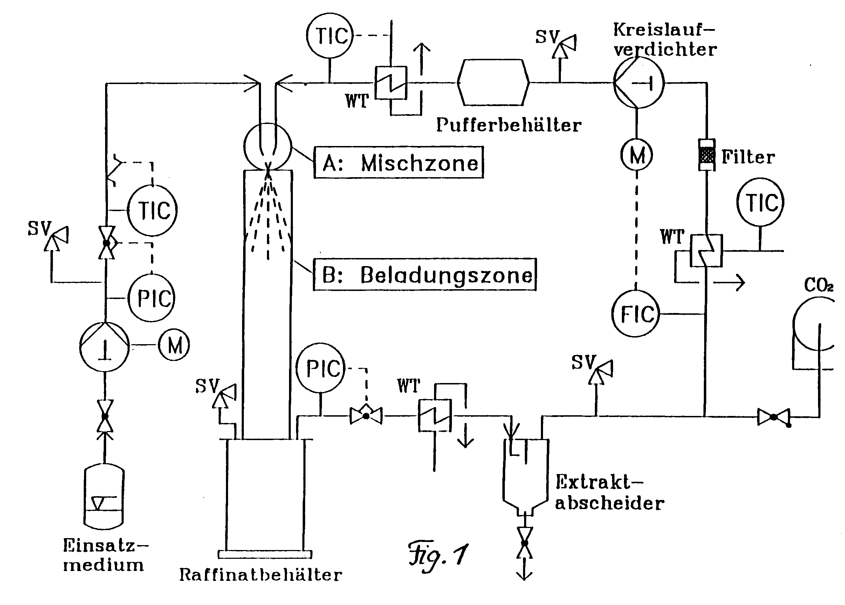

Rohes Sojalecithin wird in einem Verfahren nach Fig. 1 als Einsatzmedium in der Innenmischkammer einer Zweistoffdüse mit einem überkritischen Fluid bei Extraktionsbedingungen im Querstrom vermischt und anschließend als Tropfendispersion in eine zylinderförmige Beladungszone (14,3 mm Innendurchmesser) eingesprüht. In der zweiphasigen Strömung nimmt die fluide Phase bei Verweilzeiten von 20s bis 40s soviel Öl aus den Rohlecithinpartikeln auf, daß diese nahezu vollständig entölt sind. Das entölte Lecithin wird mechanisch (Zyklon) aus dem Fluidstrom abgetrennt und fällt als Wertstoff pulverförmig im Raffinatsammelbehälter an, während das beladene Fluid in einer Extraktabscheidestufe bei verringerten Drücken und Temperaturen regeneriert wird. Durch Verdichtung in einer Pumpe und Temperatureinstellung in einem Wärmeübertrager kann das regenerierte Fluid der Mischzone im Kreislauf erneut zugeführt werden.

Bei Verwendung von Kohlendioxid als fluider Phase werden folgende Verfahrensparameter eingestellt:

| | | |
|---|---|---|
| Extraktionsdruck: | 350 bar-1.000 bar | (bevorzugt:450bar-700 bar) |
| Extraktionstemperatur: | 60°C-150°C | (bevorzugt: 100°C-140°C) |
| Massenstromverhältnis (kg Fluid/kg Einsatzmedium): | 25 -100 | (bevorzugt: 50 - 75) |
| Abscheidedruck: | 50 bar-200 bar | (bevorzugt:100 bar-150 bar) |
| Abscheide.-temperatur: | 20°C -80°C | (bevorzugt: 40°C - 60°C). |

Ein rohes Sojalecithin mit einem Phosphatidgehalt von ca. 65 % kann bei den bevorzugten Bedingungen auf einen Restölgehalt von unter 1,5 Gew.-% entölt werden.

In der Mischzone wird bei Reynoldzahlen von 100.000 - 200.000 sehr hohe Turbulenz erreicht. Auch in der anschließenden Beladungszone wird bevorzugt eine turbulente Zweiphasenströmung bei Re-Zahlen von 30.000 - 50.000 eingestellt.

### Rohölentschleimung

Die Rohölentschleimung, bei der das aus der beladenen Fluidphase ausfallende Raffinat sowie das extrahierte Öl die Wertstoffe bilden, wird bei denselben Extraktions- und Abscheidebedingungen wie die Lecithinentölung durchgeführt. Durch den hohen in die Fluidphase übergehenden Ölanteil von 98 % muß das Massenstromverhältnis entsprechend auf 100 - 300 erhöht werden. Obwohl die Beladung bevorzugt in einer kugelfömigen Geometrie durchgeführt werden sollte, konnte in einer rohrförmigen Beladungszone bei 700 bar und 120°C schon eine Entschleimung auf einen Phosphorgehalt von 78 ppm im Öl erreicht werden.

### Kontinuierlicher Anlagenbetrieb

Es ist bisher keine Möglichkeit bekannt, einen pulverförmigen Feststoff, wie er bei der Lecithinentölung als Raffinat anfällt, kontinuierlich aus einem Druckbehälter auszutragen.

Versuche haben gezeigt, daß verdichtetes Lecithin einen druckdichten Pfropfen bildet. Somit ist ein Austrag über einen druckfesten Extruder mit anschließender Gassperrstrecke möglich. Das in dem Extruder verdichtete Lecithin bildet in der Gassperrstrecke einen druckdichten Pfropfen und wird als solcher ausgetragen. Dieses ist insbesondere bei Einsatz eines selbstreinigenden Zweiwellenextruders denkbar, da der Transport in einem Einwellenextruder durch die Kohäsion an den Schneckenwänden zum Erliegen kommt.

Für einen quasikontinuierlichen Betrieb hat sich der Einsatz von zwei oder mehr wechselseitig im Batchprozeß betriebenen Extraktionsapparaten, die aus der Verdüsungseinrichtung, Extraktionszone und Auffangbehälter bestehen, bewährt. Während der Entleerung eines Raffinatsammelbehälters kann in einem anderen Extraktionsapparat die Extraktion weiter durchgeführt werden.

### Abscheidung des Feststoffübertrags

In der Strömung aus dem Raffinatsammelbehälter in den Ölabscheider werden mit dem beladenen Öl auch Feststoffpartikel mitgeführt. Dieser Produktverlust ist auf die durch die geringe Dichtedifferenz zwischen Feststoff und verdichtetem Gas ungenügende Abscheidung im Schwerefeld zurückzuführen. Erst im Tangentialfeld läßt sich ein ausreichender Feststoffrückhalt im Raffinatbehälter verwirklichen. Dazu wird im Raffinat-sammelbehälter ein tangentialer Einlauf der Zweiphasenströmung vorgesehen und zusätzlich ein nachgeschalteter Hochdruckzyklon bei Extraktionsbedingungen eingesetzt. Erst hinter dem Hochdruckzyklon wird der Druck für die Ölabscheidung reduziert.

### Extraktions- und Abscheidebedingungen

Die Drücke und Temperaturen im Extraktions- und Abscheidebereich sollen so aufeinander abgestimmt werden, daß sich ein energetisch günstiger Betrieb bei guten Extraktionsergebnissen realisieren läßt. Für die Entölung von rohem Lecithin haben sich dabei Extraktionssdrücke bei 480 bar bewährt. Bei Temperaturen von 120°C bis 140°C ist die Dichte des Extraktionsgases bei steigender Löslichkeit für den aufzunehmenden Wertstoff erniedrigt, so daß sowohl die Beladung als auch die Feststoffrückhaltung effektiv ist.

Die Ölabscheidung hingegen soll bei möglichst hohen Drücken durchgeführt werden, so daß der Aufwand für die Rekomprimierung des Kreislaufgases verringert wird. Geeignet sind daher Abscheidebedingungen, bei denen das Gas überkritisch bleibt. Bewährt hat sich ein Abscheidedruck von 150 bar bei Temperaturen, die sich nach der Entspannung einstellen (50°C bis 70°C). Die Rekomprimierung des Kreislaufgases kann bei überkritischen Bedingungen so erfolgen, daß durch die Kompressionswärme die Extraktionstemperatur erreicht wird. Dadurch läßt sich sowohl die Kühlung zur Verflüssigung des Gases vor der Rekomprimierung als auch die Aufheizung nach der Rekomprimierung einsparen.

### Verdüsung des Einsatzmaterials

Bei einem bekannten Verfahren (EP 0 137 214) wird das Einsatzmaterial in einer düsenähnlichen Mischeinrichtung mit dem Extraktionsgasstron in Verbindung gebracht. Diese Mischeinrichtung ist durch eine echte Verdüsung zu ersetzen. Ziel der Verdüsung ist die Erzeugung von kleinen Tropfen, die in einer separaten Extraktionszone bei kurzen Diffusionswegen extrahiert werden.

Für die Einsatzmaterialien besteht die Möglichkeit einer Viskositätserniedrigung vor der Verdüsung. Für hochviskose Naturstoffe (z.B rohes Lecithin) kann dieses durch eine Vorwärmung auf maximal 70°C und eine Vorvermischung mit einem Teilstrom an Extraktionsgas erreicht werden. Durch die Vorvermischung kann die Viskosität um den Faktor 10 reduziert werden. Eine kontinuierliche Vorvermischung des Einsatzmaterials wird in einem mit einem Druckrohr gekapselten statischen Mischer erreicht.

Der Tropfenzerfall einer hochviskosen Flüssigkeit im Gasstrom wird durch die in dem o.a. Patent vorgeschlagene Führung des Extraktionsgases "in der gleichen Richtung" wie das Einsatzgemisch nur ungenügend erreicht. Für die technische Ausführung ist eine Düsenform zu wählen, in der der Extraktionsgasstrom den Einsatzmaterialstrom quer zu dessen Eintritt zerschlägt. Somit kann der Strömungsimpuls des Extraktionsgases vollständig zur Tropfenbildung verwendet werden. In einer inneren Mischkammer der Düse wird das Zweiphasengemisch gebildet, bevor es durch eine Verjüngung in die Extraktionszone eingedüst wird.

Neben einer solchen Querstromdüse ist auch eine Dralldüse denkbar, in der der Gasstrom in einer Drallströmung geführt wird. Einem hochviskosen Einsatzmaterial kann keine Drallströmung aufgeprägt werden, so daß dieses quer zum Drallstrom des Extraktionsmittels in diesen eintritt, dabei zerkleinert wird und die gebildeten Tropfen in dem Drallstrom als Mischströmung mitgeführt werden. Anschließend erfolgt ebenfalls die Eindüsung in die Extraktionszone.

### Extraktionszone

Die Extraktionszone ist als eigenständige, der Verdüsung nachgeschaltete Anlagenkomponente auszulegen. In der Extraktionszone wird die Turbulenz und die Verweilzeit der zweiphasigen Strömung zwischen den in der Verdüsung gebildeten Partikeln und dem Extraktionsgas eingestellt.

Grundsätzlich kann die Extraktionszone als Rohrstrecke oder als Behälter ausgeführt werden. Die Rohrstrecke eignet sich für Medien, die unmittelbar nach Austritt aus der Verdüsung einen rieselfähigen Feststoff ausbilden (z.B. Lecithin). Medien, die flüssige Tropfen bilden (z. B. rohes Sojaöl), bzw. erst nach endlich langer Extraktionszeit einen Feststoff ausbilden, müssen in einen Behälter mit größerem Durchmesser (ideal: Kugelbehälter) eingedüst werden, da diese Medien einen flüssigen Film an der Wand einer Rohrstrecke ausbilden wurden und somit die während der Verdüsung gewonnene Oberflächenvergrößerung zunichte gemacht würde.

Die Zweiphasenströmung aus der Extraktionszone wird direkt in einen Raffinatsammelbehälter geführt, in dem sich das Raffinat absetzen kann.

Zu den Figuren ist im einzelnen noch folgendes zu sagen:
Die Fig. 2 zeigt eine Ausführungsform der Mischzone in der Form einer Zweistoffdüse mit Querstromführung und einer inneren Mischkammer.

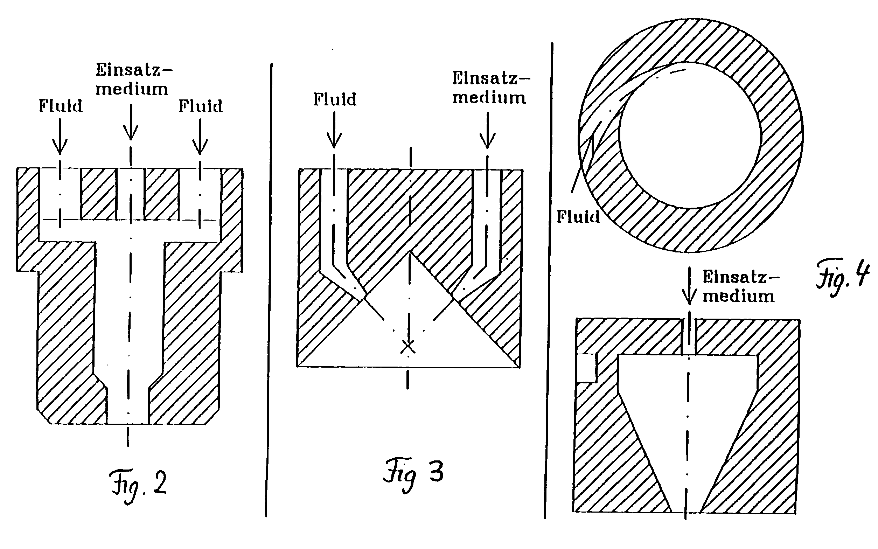

Die Fig. 3 zeigt eine äußere Vermischung durch einen Prallstrom von zwei Einstoffdüsen, die mit dem Fluid bzw. Einsatzmedium gespeist werden.
Fig. 4 zeigt in Querschnitts- und Längsansicht die Ausgestaltung einer Dralldüse, wobei das Fluid im wesentlichen tangential und das Einsatzmedium im wesentlichen axial zugeführt werden.
Bei Fig. 5 ist ein zylindrisches Rohr als Beladungszone gewählt worden.

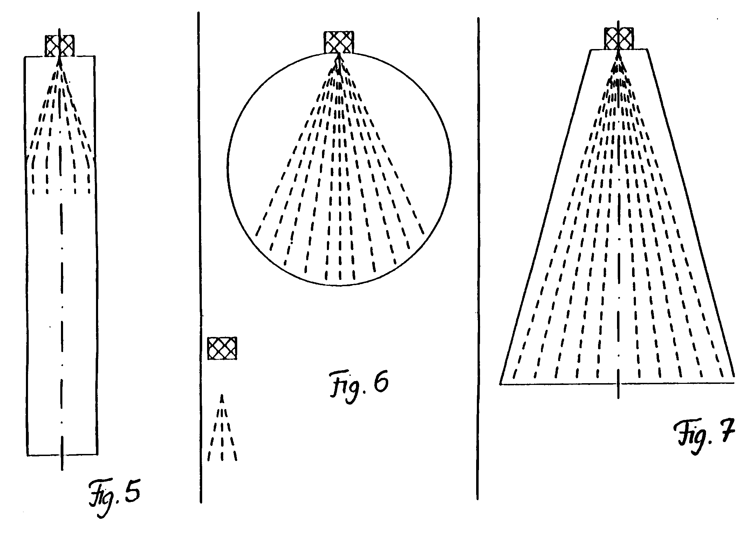

Fig. 6 zeigt zwei Ausführungsformen, wobei die Beladungszone eine Kugelform hat.
In Fig. 7 ist eine Beladungszone als stumpfer Kegel 7 wiedergegeben worden.

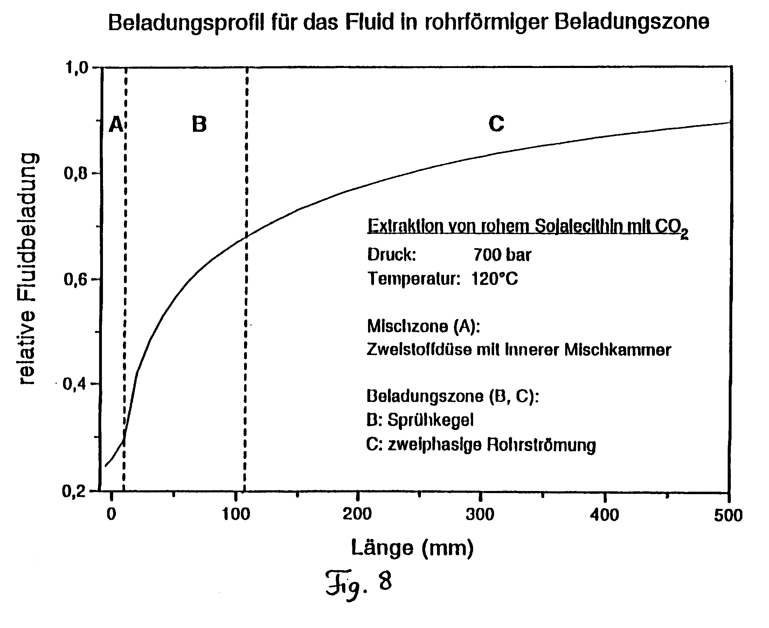

Eine Darstellung des Beladungsprofils für das Fluid in rohrförmiger Beladungszone ist in Fig. 8 gezeigt, wobei die relative Fluidbeladung über der Länge der Beladungszone abgebildet worden ist. Die einzelnen Parameter sind in der Darstellung festgehalten worden und die Mischzone ist mit A und die Beladungszone mit B /C bezeichnet worden.

## Patentansprüche

1. Verfahren zur Hochdrucksprühextraktion von flüssigen Lösungen und Suspensionen im Druckbereich bis 1000 bar mit Hilfe von verdichteten Gasen, wie CO2, Propan, Butan und Gemische davon mit und ohne Zusätze von Schleppmitteln wie: Ethanol, Propanol, Methanol, Azeton, Wasser, Methyl-Ethyl-Keton, umfassend die Vermischung von Flüssigkeit und Gas und die Stofftrennung, dadurch gekennzeichnet, daß die Vermischung in einer Mischzone und die Stofftrennung der aus der Mischzone austretenden Sprühpartikel in einer räumlich separierten Beladungs- bzw. Extraktionszone erfolgt, den Sprühpartikeln sowohl eine ausreichende Verweilzeit zur Verfügung steht als auch geometrisch optimierte Flugbahnen hinsichtlich des Stoffübergangs zwecks Beladung des verdichteten Gases mit den extraktiv aus den Sprühpartikeln abgetrennten stofflichen Komponenten eingehalten werden, wobei bei kurzen erforderlichen Verweilzeiten bzw. bei Medien, die unmittelbar nach Austritt aus der Verdüsung einen rieselfähigen Feststoff bilden, Rohrstrecken und bei Medien, die flüssige Tröpfchen bilden bzw. erst nach endlich langer Extraktionszeit einen Feststoff ausbilden, Behälter mit großem Durchmesser eingesetzt werden.

## Claims

1. Process for high-pressure spraying extraction of liquid solutions and suspensions in the pressure range up to 1000 bar by means of compressed gases, such as CO₂, propane, butane and mixtures thereof, with or without addition of less volatile auxiliary agents like ethanol, propanol, methanol, acetone, water, methyl ethyl ketone, comprising the mixing of liquid and gas and the material separation, characterized in that the mixing takes place in a mixing zone and the material separation of the spray particles leaving the mixing zone takes place in a spatially separated loading and extraction zone, that the spray particles have a sufficient period of dwell and geometrically optimized trajectories being maintained with regard to the material transition for the purpose of loading the compressed gas with the material components separated extractively from the spray particles, with pipe sections being employed in case of short necessary periods of dwell or of media forming a tricklable solid immediately after outlet of the nozzles, and vessels with a large diameter being employed in case of media forming liquid droplets or forming a solid only after a finitely long extraction time.

## Revendications

1. Procédé d'extraction de solutions et de suspensions liquides par pulvérisation à haute pression, dans la plage des valeurs de pression allant jusqu'à 1000 bars, à l'aide de gaz comprimés, comme CO₂, le propane, le butane et des mélanges de ceux-ci, avec ou sans additions d'agents entraînants, comme l'éthanol, le propanol, le méthanol, l'acétone, l'eau et la méthyléthylcétone, comprenant la mixtion d'un liquide et d'un gaz et la séparation des substances, caractérisé en ce qu'on effectue la mixtion dans une zone de mélange, on effectue la séparation des substances des particules pulvérisées sortant de la zone de mélange dans une zone de chargement ou d'extraction spatialement séparée de ladite zone de mélange et on maintient pour les particules pulvérisées, un temps de séjour suffisant tout en leur assurant des trajectoires géométriquement optimisées en ce qui concerne le transfert des substances en vue du chargement du gaz comprimé avec les composants matériels séparés des particules pulvérisées, procédé dans lequel on utilise des trajectoires tubulaires dans le cas de temps de séjour courts nécessaires ou de milieux qui forment un solide apte à l'écoulement directement après la sortie de l'atomiseur, et on utilise des conteneurs de grand diamètre dans le cas de milieux qui forment des gouttelettes liquides ou qui forment un solide seulement après un temps d'extraction finalement long.
